# EUROPÄISCHE PATENTSCHRIFT

(11) **EP 0 938 176 B1**
(45) Veröffentlichungstag und Bekanntmachung des Hinweises auf die Patenterteilung: **19.12.2001**
(21) Anmeldenummer: 99250020.7
(22) Anmeldetag: 21.01.1999
(51) Int. Cl.: H02B 13/035

(54) **Dreiphasige Doppelsammelschiene für eine gasisolierte Schaltanlage**
Three-phase duplicate busbars system for gas insulated switchgear
Double système de barre omnibus pour système de commutation à isolation gazeuse

(30) Priorität: 20.02.1998 DE 19808082
(43) Veröffentlichungstag der Anmeldung: 25.08.1999
(73) Patentinhaber: SIEMENS AKTIENGESELLSCHAFT, 80333 München (DE)
(72) Erfinder: Meinherz, Manfred, 13467 Berlin (DE)

(56) Entgegenhaltungen:
- US-A- 5 003 427

## Beschreibung

Die Erfindung liegt auf dem Gebiet der Verteilung von elektrischer Energie und ist bei der Ausgestaltung von bei gasisolierten Schaltanlagen verwendeten dreiphasigen Sammelschienen anzuwenden, bei denen die drei Phasenleiter jeder Sammelschiene benachbart zu einer Seitenwand der rohrartigen, im Querschnitt etwa rechteckförmigen Kapselung angeordnet sind.

Die bisher bei gasisolierten Schaltanlagen verwendeten Doppelsammelschienen bestehen häufig aus zwei rohrartigen, im Querschnitt kreisförmigen Kapselungen, in denen jeweils drei Phasenleiter symmetrisch verteilt angeordnet sind. Die beiden Kapselungen sind dabei getrennt voneinander oberhalb eines liegenden oder seitlich eines stehenden Leistungsschalters angeordnet und können beidseits oder einseitig zu einer gemeinsamen Stromzuführung angeordnet sein. Bei einer speziellen Ausführungsform sind die unmittelbar nebeneinander angeordneten rohrartigen Kapselungen im Querschnitt etwa rechteckförmig ausgebildet und die Phasenleiter sind jeweils über-bzw. nebeneinander sowie asymmetrisch zur Längsachse der Kapselung benachbart zu einer Seitenwand angeordnet. Durch die asymmetrische Anordnung der Phasenleiter ist Raum geschaffen für Trenn- und/oder Erder-Schalter, sogenannte Zwei- oder Drei-Stellungs-Schalter, die in die jeweilige Kapselung integriert sind. Der jeweilige Schalterantrieb ist auf die Kapselung aufgesetzt (US 4,644,442 A / Prospekt "Gas Insulated Switchgear Type L-SEP" der Fa. Elin Holec High Voltage B.V., 1995).

Ausgehend von einer dreiphasigen Sammelschiene mit den Merkmalen des Oberbegriffes des Patentanspruches 1 liegt der Erfindung die Aufgabe zugrunde, den Konstruktions- und Montageaufwand und damit auch die Kosten für eine solche Sammelschiene zu verringern.

Zur Lösung dieser Aufgabe ist gemäß der Erfindung vorgesehen, daß die beiden Kapselungen eine gemeinsame Seitenwand aufweisen und daß die Phasenleiter der beiden Sammelschienen symmetrisch zu dieser gemeinsamen Seitenwand angeordnet sind.

Bei einer derartigen Ausgestaltung der Doppelsammelschiene sind die Phasenleiter beider Sammelschienen in unmittelbarer Nähe der gemeinsamen Seitenwand angeordnet. Dadurch werden bezüglich dieser Seitenwand unabhängig davon, welche der beiden Sammelschienen betrieben wird, stets im wesentlichen gleiche thermische Verhältnisse erreicht, so daß im Zuge der Doppelsammelschiene sonst übliche Kompensatoren zum Ausgleich von Dehnungsunterschieden zwischen den beiden Sammelschienen entfallen können. - In thermischer Hinsicht kann die gemeinsame, gleichmäßig erwärmte Seitenwand dadurch realisiert werden, daß die beiden Kapselungen längs ihrer Seitenwände miteinander verspannt werden. Konstruktiv empfiehlt es sich aber, daß die gemeinsame Seitenwand Teil einer Schweißkonstruktion oder einer Gußkonstruktion ist, die beide Kapselungen umfaßt.

Sofern in die Doppelsammelschiene - wie bekannt - sogenannte Zwei- oder Drei-Stellungs-Schalter integriert sind, bietet die Zusammenfassung der beiden Kapselungen auch die Möglichkeit, in die gemeinsame Kapselung das Bodenteil und die Wandteile des Getriebekastens für den Motorantrieb der Zwei- oder Drei-Stellungs-Schalter zu integrieren. Dadurch werden Herstellungs-, Montage- und Kostenaufwand weiter verringert.

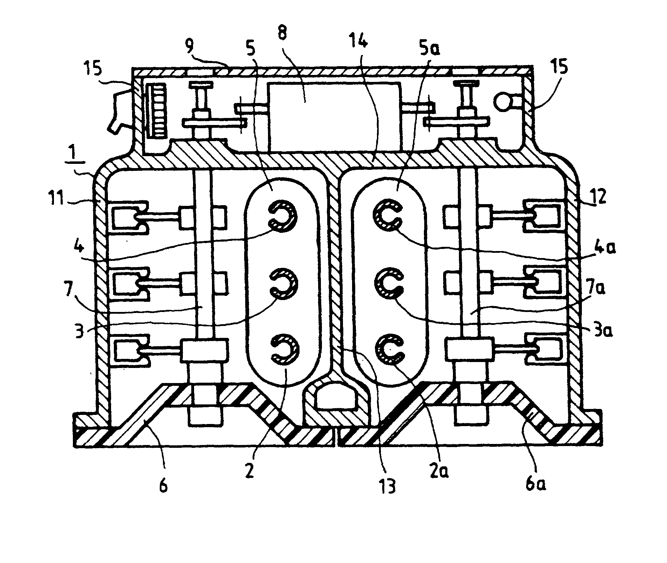

Ein Ausführungsbeispiel der neuen Doppelsammelschiene ist in der Figur dargestellt.

Die Doppelsammelschiene besteht aus einer rohrartigen, im Querschnitt etwa rechteckförmigen Kapselung 1, den Phasenleitern 2, 3 und 4 sowie 2a, 3a und 4a und den Drei-Stellungs-Schaltern 7 und 7a. Die Kapselung 1 weist hierbei zwei Außenwände 11 und 12, eine in der Mitte angeordnete Trennwand 13, das Deckenteil 14, auf das zugleich das Bodenteil für einen Getriebekasten bildet, zu dem auch die Seitenwände 15 gehören. Dabei bildet die Trennwand 13 die gemeinsame Seitenwand der Kapselungen der beiden Sammelschienen. Die Phasenleiter 2,3 und 4 sowie 2a, 3a und 4a sind spiegelsymmetrisch zu der Trennwand 13 angeordnet und haben von dieser Trennwand jeweils den gleichen Abstand. Innerhalb der Kapselung sind sie mit Hilfe von isolierenden Abstandhaltern 5 bzw. 5a fixiert.

Innerhalb der einzelnen Kapselungsräume sind die Phasenleiter asymmetrisch zur Längsachse angeordnet, so daß genügend Raum für die Anordnung der Drei-Stellungs-Schalter 7 und 7a gegeben ist, die in bekannter Weise (US 4,644,442 A) ausgebildet sind, wobei die Schaltachse und die zugehörigen Spannungsanschlüsse auf Schottisolatoren 6 bzw. 6a im Bodenbereich der Doppelsammelschiene ruhen. Die Schottisolatoren können einzeln angeordnet oder als Dreierplatte oder auch als Sechserplatte ausgebildet sein.

In dem von dem Deckenteil 14 und den Seitenwänden 15 sowie einem Deckel 9 gebildeten Getriebekasten ist der Motorantrieb 8 für die beiden Drei-Stellungs-Schalter 7, 7a angeordnet. Der Deckel 9 kann dabei Schaltstellungsanzeigen für die Trenner- und Erderstellung der drei Stellungschalter 7, 7a aufnehmen. - Da bei dieser Ausgestaltung nur ein Getriebekasten erforderlich ist, können auch die erforderlichen elektrischen Anschlüsse und Hilfseinrichtungen wie Heizung und Klemmleiste nur einmal vorgesehen sein.

## Patentansprüche

1. Dreiphasige Doppelsammelschiene für eine gasisolierte Schaltanlage,
bestehend aus zwei nebeneinander angeordneten rohrartigen, im Querschnitt etwa rechteckförmigen Kapselungen (1), in denen jeweils drei Phasenleiter (2,3,4,2a,3a,4a) über- bzw. nebeneinander sowie asymmetrisch zur Längsachse der Kapselung (1) benachbart zu einer Seitenwand angeordnet sind,
**dadurch gekennzeichnet,**
**daß** die beiden Kapselungen eine gemeinsame Seitenwand (13) aufweisen
und **daß** die Phasenleiter (2,3,4;2a,3a,4a) spiegelsymmetrisch zu dieser gemeinsamen Seitenwand (13) angeordnet sind.

2. Doppelsammelschiene nach Anspruch 1,
**dadurch gekennzeichnet,**
**daß** die gemeinsame Seitenwand Teil einer Schweißkonstruktion ist, die beide Kapselungen umfaßt.

3. Doppelsammelschiene nach Anspruch 1,
**dadurch gekennzeichnet,**
**daß** die gemeinsame Seitenwand (13) Teil einer Gußkonstruktion ist, die beide Kapselungen umfaßt.

4. Doppelsammelschiene nach einem der Ansprüche 1 bis 3, bei der in die Sammelschienen Trenner- und/oder Erder-Schalter, sogenannte Zwei- oder Drei-Stellungs-Schalter, integriert sind,
**dadurch gekennzeichnet,**
**daß** in die gemeinsame Kapselung (1) das Bodenteil (14) und die Wandteile (15) des Getriebekastens für den Motorantrieb (8) der Zwei- oder Drei-Stellungs-Schalter (7,7a) integriert sind.

## Claims

1. Three-phase double busbar for a gas-insulated switchgear assembly,
comprising two tubular encapsulation elements (1), which are arranged alongside one another and have an approximately rectangular cross section, in each of which three phase conductors (2, 3, 4, 2a, 3a, 4a) are arranged one above the other or alongside one another and assymetrically with respect to the longitudinal axis of the encapsulation element (1), adjacent to one side wall,
**characterized**
**in that** the two encapsulation elements have a common side wall (13),
and **in that** the phase conductors (2, 3, 4; 2a, 3a, 4a) are arranged with mirror-image symmetry with respect to this common side wall (13).

2. Double busbar according to Claim 1,
**characterized**
**in that** the common side wall is part of a welded structure, which includes both encapsulation elements.

3. Double busbar according to Claim 1,
**characterized**
**in that** the common side wall (13) is part of a cast structure, which includes both encapsulation elements.

4. Double busbar according to one of Claims 1 to 3, in which switch disconnectors and/or grounding switches, which are referred to as two-position or three-position switches, are integrated in the busbars,
**characterized**
**in that** the bottom part (14) and the wall parts (15) of the gearbox for the motor drive (8) of the two-position or three-position switches (7, 7a) are integrated in the common encapsulation element (1).

## Revendications

1. Double jeu de barres omnibus triphasées pour une installation de commutation à isolation gazeuse,
formé de deux encapsulages (1) tubulaires, de section transversale sensiblement rectangulaire, disposés côte à côte, dans chacun desquels trois conducteurs de phase (2, 3, 4 ; 2a, 3a, 4a) sont disposés les uns au-dessus des autres ou les uns à côté des autres ainsi que de manière asymétrique par rapport à l'axe longitudinal de l'encapsulage (1), au voisinage d'une paroi latérale,
**caractérisé en ce**
**que** les deux encapsulages présentent une paroi latérale (13) commune
et **que** les conducteurs de phase (2, 3, 4 ; 2a, 3a, 4a) sont disposés symétriquement par rapport à cette paroi latérale (13) commune.

2. Double jeu de barres omnibus selon la revendication 1,
**caractérisé en ce**
**que** la paroi latérale commune fait partie d'une construction soudée qui comprend les deux encapsulages.

3. Double jeu de barres omnibus selon la revendication 1,
**caractérisé en ce**
**que** la paroi latérale (13) commune fait partie d'une construction coulée qui comprend les deux encapsulages.

4. Double jeu de barres omnibus selon l'une des revendications 1 à 3, dans lequel des sectionneurs et/ou des interrupteurs de mise à la terre, interrupteurs dits à deux ou à trois positions, sont intégrés dans les barres omnibus,
**caractérisé en ce**
**que** la partie de fond (14) et les éléments de paroi (15) de la boîte de transmission pour l'entraînement à moteur (8) des interrupteurs à deux ou à trois positions (7, 7a) sont intégrés dans l'encapsulage (1) commun.
